# EUROPÄISCHE PATENTSCHRIFT

(11) **EP 2 628 557 B1**
(45) Veröffentlichungstag und Bekanntmachung des Hinweises auf die Patenterteilung: **23.11.2016**
(21) Anmeldenummer: 12155926.4
(22) Anmeldetag: 17.02.2012
(51) Int. Cl.: B23B 31/20, B24B 13/005

(54) **Verfahren zum Schleifen und/oder Polieren einer Linse**
Method of grinding and/or polishing a lens
Procédé de meulage et/ou de polissage d'une lentille

(43) Veröffentlichungstag der Anmeldung: 21.08.2013
(73) Patentinhaber: asphericon GmbH, 07747 Jena (DE)
(72) Erfinder: Kiontke, Sven, 07743 Jena (DE)
(74) Vertreter: Liedtke, Markus

(56) Entgegenhaltungen:
- WO-A1-2011/076904
- DE-U1- 8 601 499
- FR-A- 1 278 600
- JP-A- 5 084 605
- JP-A- 11 019 858
- JP-A- 58 181 557
- US-A- 2 578 642
- US-A- 5 525 096
- US-A1- 2005 075 060
- US-B1- 6 855 036

## Beschreibung

Die Erfindung betrifft ein Verfahren zum Schleifen und/oder Polieren einer Linse nach den Merkmalen des Oberbegriffs des Anspruchs 1.

Aus dem Stand der Technik sind, wie in der EP 1.049 555 B1 beschrieben, eine Spannzange zum Halten von Stangenmaterial in Drehmaschinen bekannt. Die Zange umfasst mehrere, lose, zusammen im Wesentlichen einen rohrförmigen Körper bildende, im Querschnitt sektorförmige Backenelemente, die je mit einer Teilkegelstumpffläche auf ihrer Außenseite und je mit einer Betätigungsausbildung an ihrem einen Ende versehen sind, wobei die Backenelemente umfangsmäßig zusammengehalten werden und durch zwischen ihnen angeordnete Federkörper voneinander beabstandet sind. Im Bereich der Teilkegelstumpffläche jedes Backenelementes ist wenigstens eine von ihr vorstehende, kleine Stützfläche als kraftübertragende Einstellausbildung für das radiale Einstellen der Backenelemente in ihre Arbeitsposition vorgesehen.

In der DE 1 754 274 U wird eine Spannzange für die Bearbeitung von Radscheiben für feinmechanische Zwecke beschrieben. Auf dem mit radialen Schlitzen versehenen Spannteil der Spannzange sind auswechselbare und gegeneinander austauschbare Segmente aus Stahl oder Messing mit Schrauben und Passstiften befestigt, die auf den erforderlichen Spanndurchmesser ausgedreht sind.

Aus der DE 1 968 912 U ist eine Spannzange mit einer Werkzeug-Anschlageinrichtung zur Aufnahme und Klemmung von Werkzeugen mit zylindrischem Schaft, insbesondere von Fräsern mit Gewindeschaft, bekannt. Die Gewindeaufnahme für die Maschinenspindel reicht bis in den geschlitzten Teil der Spannzange und nimmt vor der Maschinenspindel eine axial verstellbare Konterschraube auf.

In der WO 2009/018965 A1 werden eine Spannvorrichtung und eine Anordnung einer solchen Spannvorrichtung mit einer Spannzange beschrieben. Ein Spannfutter zur Aufnahme einer mehrteiligen Spannzange zum Einspannen eines Werkstücks weist ein Gehäuse mit Spannzangenaufnahme mit Führungseinrichtung und Führungsflächen auf. Die Spannzange ist in axialer Richtung an dem Spannfutter bewegbar. Die Führungseinrichtung weist Kugeln als Wälzkörper an den Führungsflächen auf, von denen eine Vielzahl zusammenhängend an einem Wälzkörperhalter angeordnet sind. Mit diesem zusammen sind sie in der Führungseinrichtung bewegbar von einer Ausgangslage in das Spannfutter hinein. Es ist eine Rückstelleinrichtung für den Wälzkörperhalter vorgesehen mit einer Wirkrichtung aus dem Spannfutter heraus, um die Kugeln in die Ausgangslage zurückzubewegen, wenn keine Spannzange im Spannfutter ist.

Aus der US 2006/0017238 A1 ist ein Spannzangensystem zur Linsenproduktion bekannt. Das Spannzangensystem hält ein Werkstück zur Bearbeitung in einer Maschine. Es umfasst einen Spannzahgenkörper mit einer Werkstücköffnung zum Halten des Werkstücks mit einem vorgegebenen Druck.

Auch aus der JP 10225809 A und der JP 11019858 A sind Spannzangensysteme für Linsen bekannt.

In der DE 103 15 008 A1 und der DE 103 32 673 A1 werden ein Verfahren und eine Vorrichtung zur Herstellung von Brillengläsern und anderen Formkörpern mit optisch wirksamen Oberflächen beschrieben. Dabei werden Halbfertigteile benutzt, die durch spanlose Formgebungsverfahren hergestellt werden. Anschließend werden mechanische Fertigungsschritte durchgeführt. Es werden Halbfertigteile benutzt, bei denen unter anderem ein Formrand spanlos angeformt wird. Der Formrand wird zum Spannen in den spannehmenden Bearbeitungsmaschinen benutzt. Er bleibt bei allen weiteren Bearbeitungsvorgängen erhalten und dient zum Spannen oder Ablegen des Werkstücks und auch zum Abstützen des eigentlichen Brillenglases bzw. des Formkörpers bei der weiteren Bearbeitung. Das Brillenglas wird am Ende der Bearbeitungen von dem Formrand abgetrennt.

Aus der WO 03/033205 A1 sind eine Vorrichtung und ein Verfahren zur Komplettbearbeitung von zweiseitig optisch aktiven Linsen bekannt. Die Vorrichtung umfasst eine Schneid-, Fräseinheit, und/oder eine Poliereinheit zum Bearbeiten mindestens einer ersten Seite der Linse, wobei eine Umspanneinheit zum Umspannen der Linse zwecks Bearbeitung einer zweiten Seite der Linse vorgesehen ist.

In der DE 100 53 230 A1 werden ein Spannfutter für eine Vorrichtung zum Polieren von Linsen und eine Vorrichtung mit einem solchen Spannfutter beschrieben. Das Spannfutter ist so ausgestaltet, dass zwischen einem Spannkopf und einem Spindelkopf eine federnde Nachgiebigkeit vorhanden ist. Dies wird durch ein Luftpolster hergestellt, das zwischen einem Spannkolben und einer Schubstange ausgebildet ist.

Aus der DE 103 10 561 B4 sind ein Verfahren und eine Vorrichtung zur Fertigung von Brillengläsern und anderen Formkörpern mit optisch aktiven Oberflächen bekannt. Im Verfahren werden Kunststoffrohlinge, welche die Form von flachen, runden Scheiben haben, an ihrem äußeren Rand gespannt. Eine konvexe Linsenvorderseite und/oder eine konkave Linsenruckseite werden spanabhebend mit Fräs- und/öder Drehwerkzeugen sowie durch Schleifen, Feinschleifen und gegebenenfalls durch Polieren bearbeitet. Dabei bleibt am äußeren Umfang des Werkstücks ein ringförmiger Bereich von größerer Dicke erhalten, der zum Spannen und/oder Ablegen des Werkstücks sowie zum Abstützen und Stabilisieren des Formkörpers und/oder des eigentlichen Brillenglases bei Bearbeitungs- und Transportvorgängen dient und zum Schluss entfernt wird. Der ringförmige Bereich erhält Markierungen und/oder Formgebungen zur Identifizierung der Bearbeitungsachsen. An der Oberfläche des Formkörpers bzw. des eigentlichen Brillenglases werden Feinmarkierungen angebracht, welche die Achslage der erzeugten Oberflächengeometrien kennzeichnen. Beim Fräsen der konvexen Linsenvorderseite wird im Randbereich des Werkstücks eine kreisförmige Rille erzeugt, die im Querschnitt einen Radius aufweist, der mindestens demjenigen der Frässchneide des Fräsers entspricht. Die Rille geht nach außen in den ringförmigen Bereich und nach innen in das Brillenglas über.

In der DE 40 21 722 C2 wird eine Schleifvorrichtung beschrieben. Die Schleifvorrichtung umfasst einen Halter für ein Werkstück und ein elektrisch leitendes Schleifmittel, das gegenüber dem Werkstückhalter angeordnet ist und das mit der Oberfläche eines Werkstücks in Kontakt gebracht werden kann. Zwischen dem Werkstück und dem Schleifmittel ist eine relative Drehbewegung möglich. Eine Elektrode ist derart angeordnet, dass sich im vorschubfreien Betrieb zwischen der Schleifoberfläche des Schleifmittels und der Elektrode ein Spalt von vorgegebener Größe ausbildet. Es ist eine Gleichspannungsquelle vorgesehen, deren negativer Anschluss mit der Elektrode und deren positiver Anschluss mit dem Schleifmittel verbunden ist. Des Weiteren ist eine Einrichtung vorgesehen, welche eine elektrisch schwach leitende Kühlflüssigkeit in den Zwischenraum zwischen Schleifmittel und Elektrode gibt.

Aus der GB 1,155,719 ist ein Linsenhalter bekannt. Dieser weist einen Abschnitt mit einer Ausnehmung auf, die von einer Wandung umgeben ist. Die Wandung beaufschlagt eine Kante oder Bereiche der Kante einer durch den Linsenhalter gehaltenen Linse mit einer Presskraft, die zumindest zum Teil aus einer Elastizität des Abschnitts des Linsenhalters resultiert. Der Abschnitt des Linsenhalters weist einen radialen Schlitz auf, der sich von einer Außenseite des Abschnitts durch die Wandung hindurch nach innen erstreckt, so dass der Abschnitt des Linsenhalters aufzuspreizen ist, um dadurch die Ausnehmung zum Einfügen oder Entfernen einer Linse zu vergrößern.

In der DE 296 08 877 U1 ist eine Halterung für optische Linsen bekannt. Die Halterung umfasst einen zylindrischen Grundkörper, eine daran gehalterte elastischen Linsenstützfläche sowie einen zentrischen, den Grundkörper axial durchsetzenden Kanal. Der Grundkörper ist als Abrichtwerkzeug ausgebildet.

Aus der JP 58 181557 A, die als nächstliegender Stand der Technik gegenüber dem Verfahren des Anspruchs 1 angesehen wird, ist ein Verfahren zum Polieren einer Linse bekannt, wobei die Linse in eine Spannzange zum Halten der Linse eingespannt wird und danach mittels eines Polierwerkzeugs poliert wird, wobei die Spannzange einen Schaft und zumindest zwei durch radiale Schlitze voneinander getrennte Spannbacken umfasst, wobei zentriert in einem durch die Spannbacken gebildeten Aufnahmeraum für die Linse eine Linsenabstützung mit einer abgerundeten Anlagefläche ausgebildet ist. Die bei diesem Verfahren benutzte Spannvorrichtung wird pneumatisch betrieben. Die Spannzange zum Einspannen der zu bearbeitenden Linse ist an einem axialen Ende einer Rotationswelle angeordnet und wird zum Verklemmen der Linse in der Spannzange mittels einer Feder in Richtung der Rotationswelle gezogen. Zum Lösen der Linse aus der Spannzange wird die Spannzange pneumatisch entgegen der Federkraft der Feder bewegt.

Der Erfindung liegt die Aufgabe zugrunde, ein verbessertes Verfahren zum Schleifen und/oder Polieren einer bereits einen finalen Durchmesser aufweisenden Linse anzugeben.

Die Aufgabe wird erfindungsgemäß gelöst durch ein Verfahren zum Schleifen und/oder Polieren einer Linse mit den Merkmalen des Anspruchs 1.

Vorteilhafte Ausgestaltungen der Erfindung sind Gegenstand der Unteransprüche.

In einem erfindungsgemäßen Verfahren zum Schleifen und/oder Polieren einer Linse wird die Linse mit ihrem finalen Durchmesser in eine Spannzange zum Halten der Linse eingespannt und danach mittels eines zumindest teilweise flexiblen Schleif- bzw. Polierwerkzeugs, welches sich einer Form eines zu bearbeitenden Bereichs der Linse anpasst, geschliffen oder poliert, wobei die Spannzange einen Schaft und zumindest zwei durch radiale Schlitze voneinander getrennte Spannbacken umfasst. Erfindungsgemäß ist eine Form eines oberen Randbereichs der Spannbacken, welcher eine Auflagefläche für das zumindest teilweise flexible Schleif- bzw. Polierwerkzeug bildet, als radiale Fortsetzung eines zu bearbeitenden Bereichs der mittels der Spannzange zu haltenden Linse ausgebildet, wobei das Schleif- bzw. Polierwerkzeug während einer Bearbeitung von Randbereichen der Linse teilweise auf dem oberen Randbereich der Spannbacken aufliegt.

In einer erfindungsgemäßen Ausführungsform entspricht ein Abstand von einer an einem unteren Außenrand eines durch die Spannbacken gebildeten Aufnahmeraumes für die Linse ringförmig ausgebildeten Auflagefläche für die Linse zum oberen Randbereich einer Dicke der Linse an deren Rand oder ist um einen Wert kleiner als die Dicke der Linse, welcher einem Materialabtrag während des auf das Einspannen in der Spannzange folgenden Schleifens und/oder Polierens oder dem Materialabtrag während des auf das Einspannen in der Spannzange folgenden Schleifens und/oder Polierens und einer zusätzlichen Mittendickentoleranz entspricht.

Die Linse liegt auf der Auflagefläche, welche ringförmig am unteren Außenrand des durch die Spannbacken gebildeten Aufnahmeraumes für die Linse ausgebildet ist, mit einer Rückseite auf, so dass die Linse in der Spannzange plan gehalten ist. Dabei ist die Auflagefläche zweckmäßigerweise derart korrespondierend zu einem auf der Auflagefläche aufliegenden Bereich der Rückseite der Linse ausgebildet, dass die plane Halterung der Linse in der Spannzange sichergestellt ist. Durch eine innere seitliche Anlagefläche der Spannbacken, mit welcher die Spannbacken seitlich an der Linse anliegen, ist die Linse in der Spannzange zentriert gehalten. Ein innerer Bereich, welcher von der ringförmigen Auflagefläche umschlossen ist, ist gegenüber der Auflagefläche abgesenkt ausgebildet, so dass in diesem Bereich die Linse die Spannzange nicht berührt. Auf diese Weise ist eine Beschädigung der Linse insbesondere in einem zentralen, optisch wirksamen Bereich durch die Spannzange vermieden. Des Weiteren können in diesen abgesenkten Bereich Schmutzpartikel, beispielsweise Schleif- oder Polieirückstände, von vorangegangenen Linsenbearbeitungen entweichen, so dass sie die Auflagefläche nicht beschmutzen und dadurch eine optimierte plane Auflage der Linse auf der Auflagefläche nicht behindern und die Linse nicht beschädigen.

Ein Abstand von der Auflagefläche für die Linse zum oberen Randbereich der Spannbacken entspricht erfindungsgemäß der Dicke der Linse an deren Rand oder ist geringfügig kleiner. Dies gilt für die Dicke der in der Spannzange eingespannten Linse vor ihrer auf das Einspannen folgenden Bearbeitung durch Schleifen und/oder Polieren. Auf diese Weise ist ein nahtloser Übergang vom zu bearbeitenden Bereich der Linse auf den oberen Randbereich der Spannbacken ermöglicht. Dadurch ist eine Verformung des Schleif- bzw. Polierwerkzeugs beim Übergang vom zu bearbeitenden Bereich der Linse auf den oberen Randbereich der Spannbacken, welche zu Bearbeitungsfehlern der Linse führen würde, vermieden.

Dabei ist in einer ersten Alternative der Abstand um einen Wert kleiner als die Dicke der Linse, welcher einem Materialabtrag während des auf das Einspannen in der Spannzange folgenden Schleifens und/oder Polierens entspricht. D. h. vor der Bearbeitung der Linse ist der Rand der in der Spannzange eingespannten Linse geringfügig höher als der angrenzende Rand des oberen Randbereichs der Spannbacken. Nach der Bearbeitung der Linse, d. h. nach dem durch Schleifen und/oder Polieren von der Linse erfolgtem Materialabtrag, sind der Rand der Linse und der angrenzende Rand des oberen Randbereichs der Spannbacken dann auf gleicher Höhe.

In einer zweiten Alternative ist der Abstand um einen Wert kleiner als die Dicke der Linse, welcher dem Materialabtrag während des auf das Einspannen in der Spannzange folgenden Schleifens und/oder Polierens und einer zusätzlichen Mittendickentoleranz entspricht, da die Dicke der Linsen nicht identisch ist, sondern Toleranzen, d. h. diese Mittendickentoleranzen, aufweisen können. Des Weiteren ist dadurch auch beispielsweise ein weiterer Bearbeitungsgang, beispielsweise ein zweites Polieren, möglich, falls während des ersten Bearbeitungsgang ein Fehler aufgetreten sein sollte.

In einer alternativen erfindungsgemäßen Ausführungsform ist zentriert in einem durch die Spannbacken gebildeten Aufnahmeraum für die Linse eine Linsenabstützung ausgebildet. Diese Ausführungsform ist beispielsweise für Linsen mit einer dem zu bearbeitenden Bereich gegenüberliegenden konkaven Rückseite geeignet und ermöglicht eine alternative Abstützung und plane Halterung der Linse in der Spannzange. Die ringförmige randseitige Auflagefläche ist bei dieser Ausführungsform daher nicht unbedingt erforderlich. Eine Anlagefläche der Linsenabstützung ist erfindungsgemäß abgerundet ausgebildet, um eine Beschädigung der anliegenden Linse zu vermeiden. Die Linsenabstützung bzw. deren Anlagefläche ist zweckmäßigerweise derart korrespondierend zu einem auf der Anlagefläche aufliegenden Bereich der Rückseite der Linse ausgebildet, dass die plane Halterung der Linse in der Spannzange sichergestellt ist. In dieser Ausführungsform der Spannzange ist die Linse durch die innere seitliche Anlagefläche der Spannbacken, mit welcher die Spannbacken seitlich an der Linse anliegen, in der Spannzange zentriert gehalten und durch die Linsenabstützung in der Spannzange abgestützt und plan gehalten.

Die Spannzange, welche beispielsweise auch drei oder sechs Spannbacken aufweisen kann, ermöglicht ein einfaches und schnelles Einspannen der Linse, um diese für eine nachfolgende Bearbeitung, insbesondere für ein Schleifen und/oder Polieren, zu halten. Dazu ist die Linse in die Spannzange einzulegen und die Spannzange mit dem Schaft beispielsweise in ein Hydrodehn-Spannfutter einzuspannen, wodurch sich die Spannbacken an die Linse anlegen.

In der Spannzange ist die Linse hochgenau gehalten und zentriert, so dass ein hochgenaues Schleifen und/oder Polieren der Linse ermöglicht ist. D. h. die Linse ist in der Spannzange sowohl plan gehalten als auch zentriert gehalten. Ein Fehler in Planlauf und Rundlauf der in der Spannzange gehaltenen Linse beträgt beispielsweise weniger als 5 µm, er liegt üblicherweise im Bereich von 2 µm.

Der obere Randbereich, welcher entsprechend des zu bearbeitenden Bereiches der Linse ausgeformt ist, bildet eine Auflagefläche für das Schleif- bzw. Polierwerkzeug, welches zumindest teilweise flexibel ist und sich dadurch einer Form des zu bearbeitenden Bereichs, d. h. einer Oberfläche der Linse anpasst. In Randbereichen der Linse liegt das Schleif- bzw. Polierwerkzeug dann teilweise auf dem oberen Randbereich der Spannbacken auf, welcher praktisch eine radiale Erweiterung der zu bearbeitenden Oberfläche der Linse bildet. Dadurch behält das Schleif- bzw. Polierwerkzeug weiterhin die der Oberfläche der Linse angepasste Form und knickt nicht am Außenrand der Linse ab. Auf diese Weise sind Bearbeitungsfehler der Linse durch ein sich über dem Außenrand der Linse verformendes Schleif- bzw. Polierwerkzeug verhindert und es ist ein gleichmäßiges und hochgenaues Schleifen bzw. Polieren der Linse über die gesamte Oberfläche inklusive des Randbereiches der Linse ermöglicht. Dadurch kann zum Beispiel auch ein nachfolgendes Abtrennen des Seitenrandbereiches der Linse, welcher mittels Vorrichtungen nach dem Stand der Technik nicht optimal bearbeitet werden kann, vermieden werden, so dass ein Linsenmaterial optimal nutzbar und eine Bearbeitungszeit reduziert ist.

In Vorrichtungen nach dem Stand der Technik weisen die Linsen einen größeren Durchmesser auf, als für die fertig bearbeitete Linse erforderlich. Sie sind auf einem Linsenhalter manuell aufzukleben und zu zentrieren. Nach dem Schleifen und/oder Polieren ist der Randbereich abzutrennen, d. h. die Linse ist abzuzentrieren, um sie auf ihren finalen Durchmesser zu bringen. Dies erfordert einen höheren Material- und Bearbeitungszeitaufwand und daraus resultierende höhere Kosten.

In die Spannzange ist die Linse hingegen mit ihrem finalen Durchmesser einzuspannen. Das Zentrieren der Linse in der Spannzange erfolgt durch das Schließen der Spannbacken automatisch. Es entfällt auf diese Weise sowohl das aufwändige manuelle Aufkleben der Linse auf den Halter und das Zentrieren auf diesem Halter als auch das nachfolgende Abzentrieren der Linse, d. h. das Abtrennen des Randbereichs.

Die Spannzange ist insbesondere zum Halten von asphärischen Linsen bzw. von Linsen mit einem asphärisch zu bearbeitenden, d. h. zu schleifenden und/oder zu polierenden Bereich geeignet.

Nach erfolgter Bearbeitung der Linse ist die Spannzange aus dem Hydrodehn-Spannfutter zu entfernen, die Linse aus der Spannzange zu entnehmen und eine weitere zu bearbeitende Linse auf gleiche Weise hochgenau einzuspannen. Dies ist insbesondere im Vergleich zu einer Linsenbearbeitung nach dem Stand der Technik, bei welcher ein manuelles Ankleben der zu bearbeitenden Linse an einem Halter und ein nachfolgendes Ausrichten erforderlich ist, eine erhebliche Arbeitserleichterug und Bearbeitungszeitreduzieuung. Es ist auch möglich, das Hydrodehn-Spannfutter lediglich zu öffnen, wodurch sich auch die Spannbacken der Spannzange öffnen, und die Spannzange im Hydrodehn-Spannfutter zu belassen. Die Linse ist dann beispielsweise mittels eines Unterdruckgreifwerkzeugs aufzunehmen und aus der Spannzange zu entnehmen. Es kann dann eine weitere Linse zur Bearbeitung in die Spannzange eingespannt werden und das Hydrodehn-Spannfutter und dadurch die Spannbacken sind wieder zu schließen. Auf diese Weise entfallen das Entnehmen der Spannzange aus dem Hydroden-Spannfutter und das Wiedereinsetzen in das Hydrodehn-Spannfutter.

Zweckmäßigerweise ist der obere Randbereich, je nach der zu bearbeitenden Linse, asphärisch, konisch oder sphärisch ausgeformt, um eine Fortsetzung der Form des zu bearbeitenden Bereichs auf dem oberen Randbereich der Spannbacken zu ermöglichen.

Zweckmäßigerweise ist die Spannzange aus Metall hergestellt, insbesondere aus Stahl, bevorzugt aus gehärtetem Stahl. Dadurch weist die Spannzange eine gute Spannung auf, so dass eine Vielzahl von Linsen optimal einspannbar, haltbar und bearbeitbar sind. Des Weiteren weist die Spannzange eine hohe Widerstandsfähigkeit und einen geringen Verschleiß beim Polieren auf, so dass eine hohe Genauigkeit beim Einspannen der Linsen und beim Bearbeiten der Linsen ermöglicht ist, auch nach einer Vielzahl bearbeiteter Linsen, d. h. es ist eine lange Einsatzdauer der Spannzange ermöglicht. Insbesondere ist dadurch eine Abnutzung des oberen Randbereichs durch das Schleif- bzw. Polierwerkzeug sehr gering, so dass auch nach einer Vielzahl mittels der Spannzange gehaltener und bearbeiteter Linsen der obere Randbereich der Spannbacken noch als die radiale Fortsetzung des zu bearbeitenden Bereichs der mittels der Spannzange zu haltenden Linsen ausgebildet ist.

Vorzugsweise ist eine Wandstärke des Schaftes unterhalb der radialen Schlitze, d. h. an einem unteren Ende des Schaftes, dünner ausgebildet als im Bereich der radialen Schlitze. Dadurch ist ein exakter Schwenkpunkt der Spannbacken vorgegehen, um welche sie bei einem Zusammenpressen beispielsweise durch das Hydrodehn-Spannfutter schwenken und sich dadurch aneinander annähern, wodurch sich die Spannzange schließt und die Linse einspannt. Durch die stärkere Ausformung des oberen Bereichs des Schaftes, d. h. im Bereich der radialen Schlitze, ist ein Verformen des Schaftes während des Spannens und dadurch ein ungleichmäßiges oder nicht ausreichende Spannen der Spannzange vermieden.

Vorzugsweise weist der Schaft an einer Außenseite im Übergangsbereich zu den Spannbacken eine nutartige Schaftvertiefung auf. Zweckmäßigerweise weisen auch die Spannbacken an einer Außenseite im Übergangsbereich zum Schaft, d. h. an einer Unterseite, eine nutartige Spannbackenvertiefung auf. Die beiden nutartigen Vertiefungen sind vorzugsweise zu einer umlaufenden Vertiefung verbunden. Diese Vertiefung ermöglicht bzw. die Schaftvertiefung und die Spannbackenvertiefung ermöglichen ein optimiertes Einsetzen der Spannzange in das Hydrodehn-Spannfutter, wobei die Spannzange sowohl mit dem Schaft als auch mit der Unterseite der Spannbacken optimal am Hydrodehn-Spannfutter anliegt und nicht durch eventuelle Schmutzpartikel, zum Beispiel Schleif- oder Polierrückstände vorangegangener Linsenbearbeitungen, behindert ist. Diese Schmutzpartikel können in die Vertiefung entweichen und behindern das Einsetzen der Spannzange in das Hydrodehn-Spannfutter nicht. Dadurch ist ein exaktes Spannen der Spannzange und auf diese Weise ein exaktes Einspannen der Linse in der Spannzange ermöglicht.

Ausführungsbeispiele der Erfindung werden im Folgenden anhand von Zeichnungen näher erläutert.

Darin zeigen:
- Figur 1: eine perspektivische Darstellung einer ersten Ausführungsform einer Spannzange,
- Figur 2: eine erste Ausführungsform einer Spannzange von oben,
- Figur 3: eine Seitenansicht einer ersten Ausführungsform einer Spannzange,
- Figur 4: eine Längsschnittdarstellung einer ersten Ausführungsform einer Spannzange,
- Figur 5: eine erste Detailansicht aus Figur 4,
- Figur 6: eine zweite Detailansicht aus Figur 4,
- Figur 7: eine perspektivische Darstellung einer zweiten Ausführungsform einer Spannzange von oben,
- Figur 8: eine perspektivische Darstellung einer zweiten Ausführungsform einer Spannzange von unten,
- Figur 9: eine zweite Ausführungsform einer Spannzange von oben,
- Figur 10: eine Längsschnittdarstellung, einer zweiten Ausführungsform einer Spannzange mit eingespannter Linse,
- Figur 11: eine Längsschnittdarstellung einer zweiten Ausführungsform einer Spannzange entlang der Schnittlinie XI-XI aus Figur 9,
- Figur 12: eine Detailansicht aus Figur 11,
- Figur 13: eine Seitenansicht einer dritten Ausführungsform einer Spannzange,
- Figur 14: eine dritte Ausführungsform einer Spannzange von oben,
- Figur 15: eine Längsschnittdarstellung einer dritten Ausführungsform einer Spannzange,und
- Figur 16: ein Querschnitt einer in die dritte Ausführungsform der Spannzange einzuspannenden Linse.

Einander entsprechende Teile sind in allen Figuren mit den gleichen Bezugszeichen versehen.

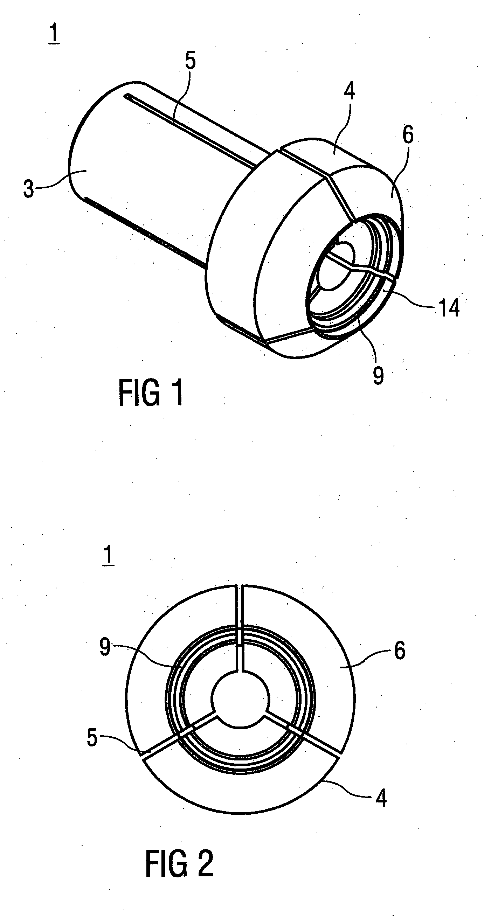

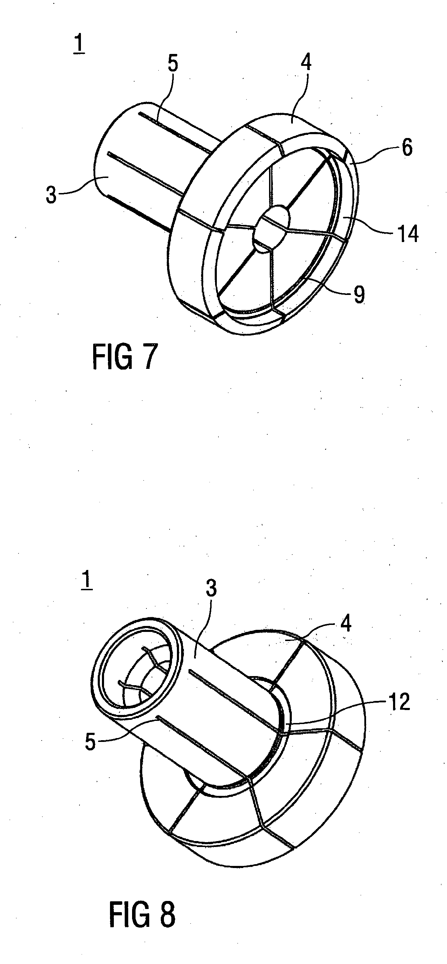

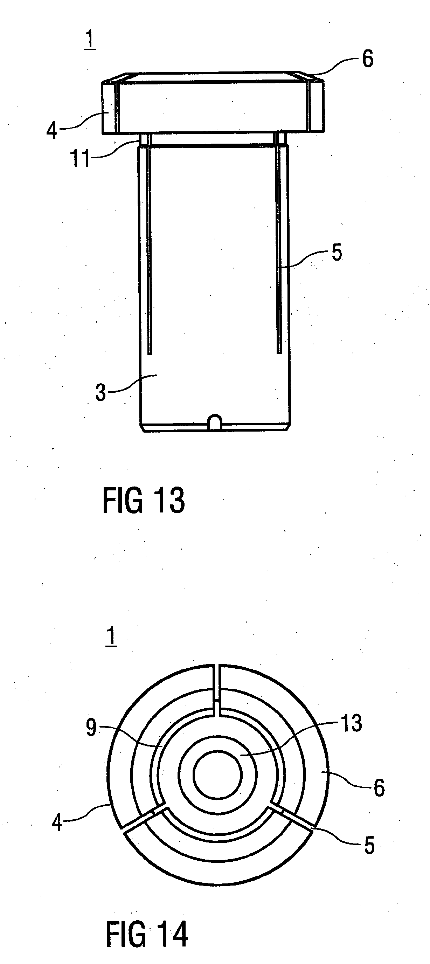

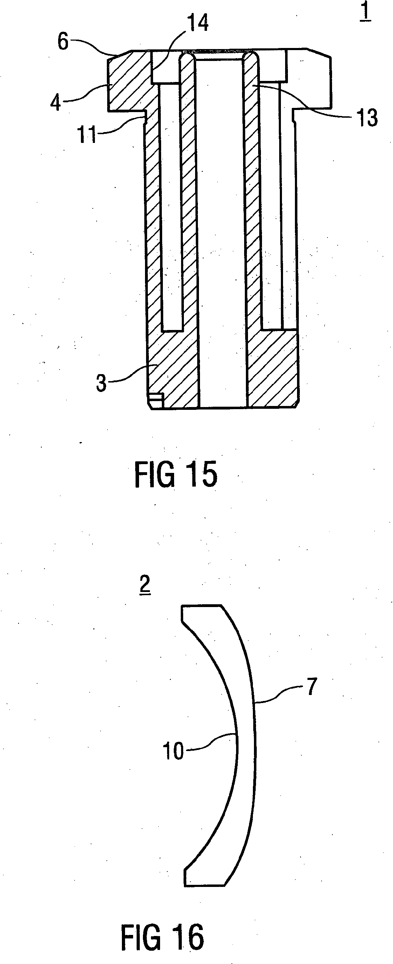

Die Figuren 1 bis 6 zeigen eine erste beispielhafte Ausführungsform, die Figuren 7 bis 12 eine zweite beispielhafte Ausführungsform und die Figuren 13 bis 15 eine dritte beispielhafte Ausführungsform einer Spannzange 1 zum Halten von Linsen 2, um diese zu bearbeiten, beispielsweise zu schleifen und/oder zu polieren. Figur 16 zeigt ein Beispiel einer mittels der Spannzange 1, insbesondere mittels der dritten Ausführungsform der Spannzange 1 zu haltenden Linse 2.

Die Spannzange 1 umfasst einen Schaft 3 und eine Mehrzahl von Spannbacken 4, in der ersten und dritten Ausführungsform drei Spannbacken 4 und in der zweiten Ausführungsform sechs Spannbacken 4. Selbstverständlich sind auch andere Ausführungsformen von Spannzangen 1 mit einer anderen Anzahl von Spannbacken 4 möglich.

Die Spannbacken 4 sind durch radiale Schlitze 5 voneinander getrennt und bilden einen runden Aufnahmeraum zum Halten runder Linsen 2. Die radialen Schlitze 5 verlaufen bis in einen unteren Bereich des Schaftes 3, d. h. der Schaft 3 ist aus mehreren Schaftteilen gebildet, welche nur an einem unteren Ende des Schaftes 3 miteinander verbunden sind, im weiteren Schaftverlauf durch die radialen Schlitze 5 voneinander getrennt sind und an welchen an einem oberen Ende des Schaftes 3 die Spannbacken 4 angeordnet sind.

Eine Form eines oberen Randbereichs 6 der Spannbacken 4 ist als radiale Fortsetzung eines zu bearbeitenden Bereichs 7 der mittels der Spannzange 1 zu haltenden Linse 2 ausgebildet, beispielsweise asphärisch, konisch oder sphärisch. Dabei ist die Spannzange 1 beispielsweise zunächst in einer Grobform herstellbar und anschließend eine finale Endform ausformbar, beispielsweise in Bearbeitungsmaschinen für die Linsen 2. Dazu ist der obere Randbereich 6 beispielsweise mit einer Schleifscheibe aus kubischem Bornitrit zu schleifen und dadurch an die benötigte Form, welche der radialen Fortsetzung des zu bearbeitenden Bereichs 7 der mittels der Spannzange 1 zu haltenden Linse 2 entspricht, anzupassen.

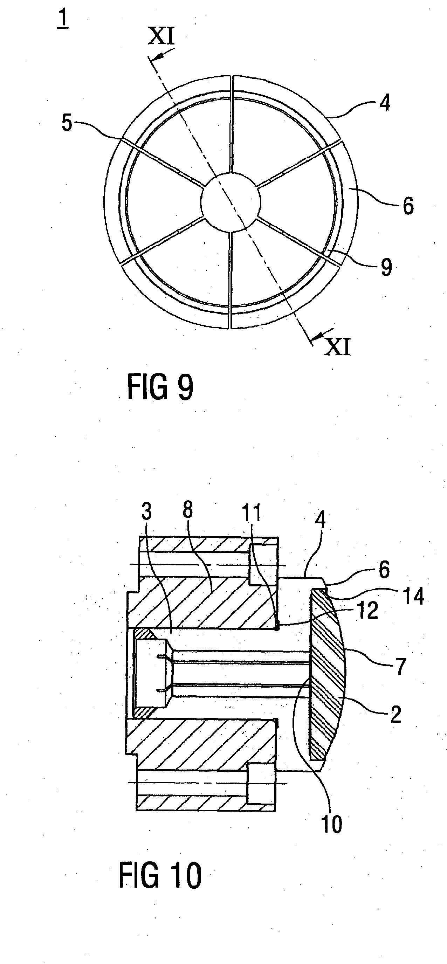

Die Spannzange 1 ermöglicht, wie beispielsweise in Figur 10 dargestellt, ein einfaches und schnelles Einspannen der Linse 2, um diese für eine nachfolgende Bearbeitung, insbesondere für ein Schleifen und/oder Polieren, zu halten. Dabei ist die Spannzange 1 insbesondere zur Fertigung asphärischer Linsen 2 geeignet, d. h. zumindest der zu bearbeitende, beispielsweise zu schleifende und/oder zu polierende Bereich 7 der Linse 2 ist asphärisch ausgebildet und/oder ist durch das Schleifen und/oder Polieren der in der Spannzange 1 gehaltenen Linse 2 asphärisch auszubilden.

Zum Einspannen und Halten der Linse 2 ist die Linse 2 in die Spannzange 1, d. h. in den durch die Spannbacken 4 gebildeten runden Aufnahmeraum einzulegen und die Spannzange 1 mit dem Schaft 3 beispielsweise, wie in Figur 10 dargestellt, in ein Hydrodehn-Spannfutter 8 oder in ein anderes geeignetes Spannelement einzuspannen, wodurch sich die Spannbacken 4 mit inneren seitlichen Anlageflächen 14 an die Linse 2 anlegen und diese in der Spannzange zentrieren. D. h. die Spannzange 1 ist mit dem Schaft 3 in das Hydrodehn-Spannfutter 8 einzuführen, bis eine Unterseite der Spannbacken 4 auf einer Oberseite des Hydrodehn-Spannfutters 8 aufliegt. Danach ist das Hydrodehn-Spannfutter 8 mit Druck zu beaufschlagen und dadurch gegen den Schaft 3 zu pressen, wodurch die Schaftteile nach innen gepresst werden. D. h. die durch das Hydrodehn-Spannfutter 8 gepressten Schaftteile schwenken um eine am unteren Ende des Schaftes 3 durch die dort miteinander verbundenen Schaftteile gebildete Schwenkachse aufeinander zu, wodurch auch die am oberen Ende des Schaftes 3 an den Schaftteilen angeordneten Spannbacken 4 aufeinander zu schwenken. Dies bewirkt ein Einspannen der zwischen den Spannbacken 4 angeordneten Linse 2 in der Spannzange 1. Die Schwenkachse liegt dabei im Bereich eines unteren Endes der radialen Schlitze 5.

In der Spannzange 1 ist die Linse 2 hochgenau gehalten und zentriert, so dass ein hochgenaues Schleifen und/oder Polieren der Linse 2 ermöglicht ist. D. h. die Linse 2 ist in der Spannzange 1 sowohl plan gehalten als auch zentriert gehalten. Ein Fehler in Planlauf und Rundlauf der in der Spannzange 1 gehaltenen Linse 2 beträgt beispielsweise weniger als 5 µm, er liegt üblicherweise im Bereich von 2 µm.

Der obere Randbereich 6, welcher entsprechend des zu bearbeitenden Bereiches 7 der Linse 2 ausgeformt ist, bildet eine Auflagefläche für das Schleif- bzw. Polierwerkzeug, welches zumindest teilweise flexibel ist und sich dadurch einer Form des zu bearbeitenden Bereichs 7, d. h. einer zu bearbeitenden Oberfläche der Linse 2 anpasst. In Randbereichen der Linse 2 liegt das Schleif- bzw. Polierwerkzeug dann teilweise auf dem oberen Randbereich 6 der Spannbacken 4 auf, welcher praktisch eine radiale Erweiterung der zu bearbeitenden Oberfläche der Linse 2 bildet. Dadurch behält das Schleif- bzw. Polierwerkzeug weiterhin die der zu bearbeitenden Oberfläche der Linse 2 angepasste Form und knickt nicht am Außenrand der Linse 2 ab.

Auf diese Weise sind Bearbeitungsfehler der Linse 2 durch ein sich über dem Außenrand der Linse 2 verformendes Schleif- bzw. Polierwerkzeug verhindert und es ist ein gleichmäßiges und hochgenaues Schleifen bzw. Polieren der Linse 2 über die gesamte Oberfläche inklusive des Randbereiches der Linse 2 ermöglicht, d. h. über den gesamten zu bearbeitenden Bereich 7 der Linse 2 hinweg. Dadurch kann zum Beispiel auch ein nachfolgendes Abtrennen eines Seitenrandbereiches der Linse 2, welcher mittels Vorrichtungen nach dem Stand der Technik nicht optimal bearbeitet werden kann, vermieden werden, so dass ein Linsenmaterial optimal nutzbar und eine Bearbeitungszeit reduziert ist.

In Vorrichtungen nach dem Stand der Technik weisen die Linsen einen größeren Durchmesser auf, als für die fertig bearbeitete Linse erforderlich. Sie sind auf einem Linsenhalter manuell aufzukleben und zu zentrieren. Nach dem Schleifen und/oder Polieren ist der Randbereich abzutrennen, d. h. die Linse ist abzuzentrieren, um sie auf ihren finalen Durchmesser zu bringen. Dies erfordert einen höheren Material- und Bearbeitungszeitaufwand und daraus resultierende höhere Kosten.

In die Spannzange 1 ist die Linse hingegen mit ihrem finalen Durchmesser einzuspannen. Das Zentrieren der Linse 2 in der Spannzange 1 erfolgt durch das Schließen der Spannbacken 4 automatisch. Es entfällt auf diese Weise sowohl das aufwändige manuelle Aufkleben der Linse 2 auf den Halter und das Zentrieren auf diesem Halter als auch das nachfolgende Abzentrieren der Linse 2, d. h. das Abtrennen des Randbereichs der Linse 2.

Nach erfolgter Bearbeitung der Linse 2 ist die Spannzange 1 aus dem Hydrodehn-Spannfutter 8 zu entfernen, die Linse 2 aus der Spannzange 1 zu entnehmen und eine weitere zu bearbeitende Linse 2 auf gleiche Weise hochgenau einzuspannen und danach zu bearbeiten. Dies ist insbesondere im Vergleich zu einer Linsenbearbeitung nach dem Stand der Technik, bei welcher ein manuelles Ankleben der zu bearbeitenden Linse 2 an einem Halter und ein nachfolgendes Ausrichten erforderlich ist, eine erhebliche Arbeitserleichterung und Bearbeitungszeitreduzierung.

Es ist auch möglich, das Hydrodehn-Spannfutter 8 lediglich zu öffnen, wodurch sich auch die Spannbacken 4 der Spannzange 1 öffnen, und die Spannzange 1 im Hydrodehn-Spannfutter 8 zu belassen. Die Linse 2 ist dann beispielsweise mittels eines Unterdruckgreifwerkzeugs aufzunehmen und aus der Spannzange 1 zu entnehmen. Es kann dann eine weitere Linse 2 zur Bearbeitung in die Spannzange 1 eingespannt werden und das Hydrodehn-Spannfutter 8 und dadurch die Spannbacken 4 sind wieder zu schließen. Auf diese Weise entfallen das Entnehmen der Spannzange, 1 aus dem Hydrodehn-Spannfutter 8 und das Wiedereinsetzen in das Hydrodehn-Spannfutter 8.

Die Spannzange 1 ist vorteilhafterweise aus gehärtetem Stahl hergestellt. Sie ist zweckmäßigerweise einstückig ausgebildet. Durch den gehärteten Stahl weist die Spannzange 1 eine gute Spannung auf, so dass eine Vielzahl von Linsen 2 optimal einspannbar, haltbar und bearbeitbar sind. Des Weiteren weist die Spannzange 1 eine hohe Widerstandsfähigkeit und einen geringen Verschleiß beim Polieren auf, so dass eine hohe Genauigkeit beim Einspannen der Linsen 2 und beim Bearbeiten der Linsen 2 ermöglicht ist, auch nach einer Vielzahl bearbeiteter Linsen 2, d. h. es ist eine lange Einsatzdauer der Spannzange 1 ermöglicht.

Insbesondere ist eine Abnutzung des oberen Randbereiches 6 der Spannbacken 4 durch das zur Bearbeitung der Linsen 2 eingesetzte Schleif- bzw. Polierwerkzeug aufgrund des gehärteten Stahls sehr gering, so dass auch nach einer Vielzahl mittels der Spannzange 1 gehaltener und bearbeiteter Linsen 2 der obere Randbereich 6 noch als radiale Fortsetzung des zu bearbeitenden Bereichs 7 der mittels der Spannzange 1 zu haltenden Linsen 2 ausgebildet ist und dadurch eine gute Abstützung für das Schleif- bzw. Polierwerkzeug während des Schleifens bzw. Polierens insbesondere von Randbereichen der Linse 2 bildet.

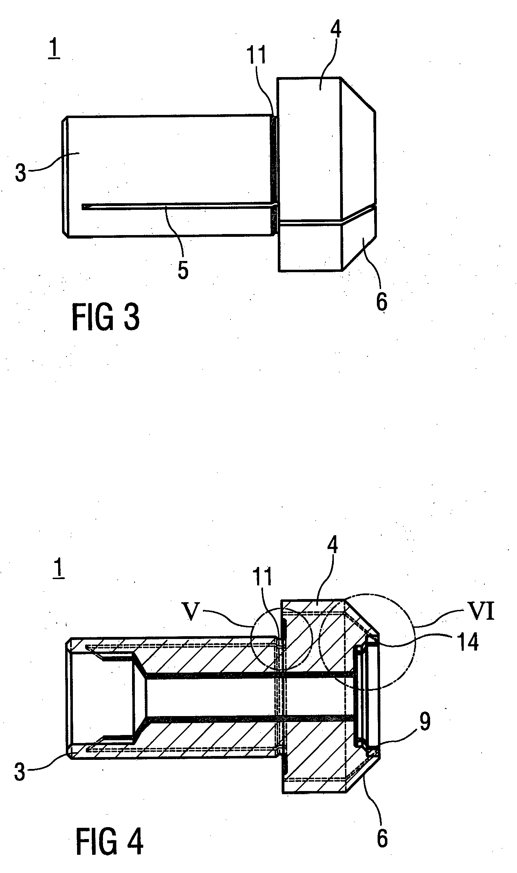

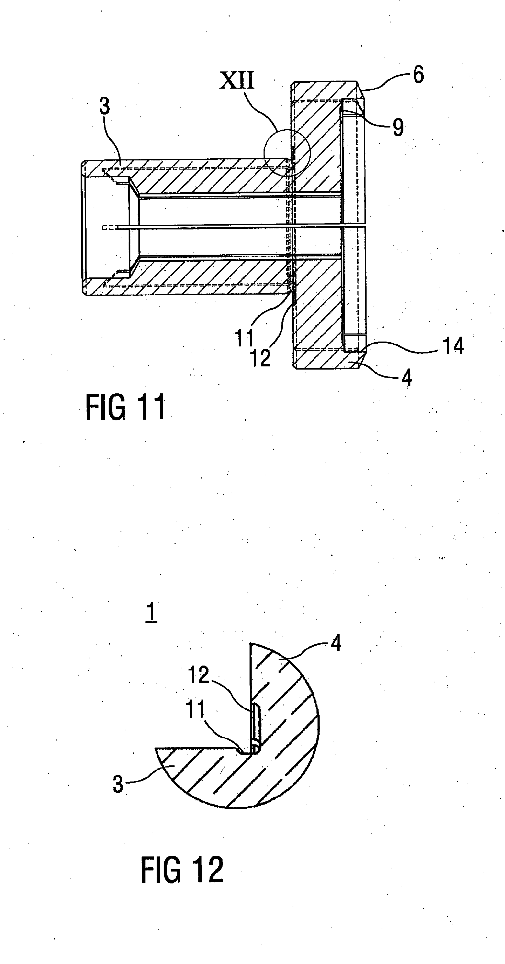

Wie in den Figuren 4 und 11 dargestellt, ist eine Wandstärke des Schaftes 3 im ersten und zweiten Ausführungsbeispiel unterhalb der radialen Schlitze 5 dünner ausgebildet als im Bereich der radialen Schlitze 5, d. h. ein Verbindungsbereich der Schaftteile am unteren Ende des Schaftes 3 weist eine geringere Wandstärke auf als die durch die radialen Schlitze 5 getrennten Schaftteile selbst. Dadurch ist ein exakter Schwenkpunkt der Spannbacken 4 vorgegeben, um welche sie bei einem Zusammenpressen beispielsweise durch das Hydrodehn-Spannfutter 8 schwenken und sich dadurch aneinander annähern, wodurch sich die Spannzange 1 schließt und die Linse 2 einspannt. D. h. durch den Verbindungsbereich der ansonsten durch die radialen Schlitze 5 voneinander getrennten Schaftteile ist die Schwenkachse der Schaftteile und dadurch der am oberen Ende der Schaftteile ausgeformten Spannbacken 4 ausgebildet. Die Schwenkachse liegt im Bereich des unteren Endes der radialen Schlitze 5. Durch die stärkere Ausformung des oberen Bereichs des Schaftes 3, d. h. der durch die radialen Schlitze 5 getrennten Schaftteile, ist ein Verformen des Schaftes 3 im Bereich der Schaftteile und der angeformten Spannbacken 4 während des Spannens und dadurch ein ungleichmäßiges oder nicht ausreichende Spannen der Spannzange 1 vermieden.

Ein Abstand von einer Auflagefläche 9 für die Linse 2 zum oberen Randbereich 6 entspricht, wie in Figur 10 zu erkennen, einer Dicke der Linse 2 in diesem Bereich oder ist geringfügig kleiner. Dies gilt für die Dicke der in der Spannzange 1 eingespannten Linse 2 vor deren nachfolgender Bearbeitung. Auf diese Weise ist ein nahtloser Übergang vom zu bearbeitenden Bereich 7 der Linse 2 auf den oberen Randbereich 6 der Spannbacken 4 ermöglicht. Dadurch ist eine Verformung des Schleif- bzw. Polierwerkzeugs beim Übergang vom zu bearbeitenden Bereich 7 der Linse 2 auf den oberen Randbereich 6 der Spannbacken 4, welche zu Bearbeitungsfehlern der Linse 2 führen würde, vermieden.

Vorzugsweise ist der Abstand um einen Wert kleiner als die Dicke der Linse 2, welcher einem Materialabtrag während des Schleifens und/oder Polierens entspricht. D. h. vor der Bearbeitung der Linse 2 ist der Rand der in der Spannzange 1 eingespannten Linse 2 geringfügig höher als der angrenzende Rand des oberen Randbereichs 6 der Spannbacken 4. Nach der Bearbeitung der Linse 2, d. h. nach dem durch Schleifen und/oder Polieren von der Linse 2 erfolgten Materialabtrag sind der Rand der Linse 2 und der angrenzende Rand des oberen Randbereichs 6 der Spannbacken 4 dann auf gleicher Höhe.

Zweckmäßigerweise ist der Abstand um einen Wert kleiner als die Dicke der Linse 2, welcher dem Materialabtrag während des auf das Einspannen in der Spannzange 1 folgenden Schleifens und/oder Polierens und einer zusätzlichen Mittendickentoleranz entspricht, da die Dicke der Linsen 2 nicht identisch ist, sondern Toleranzen, d. h. diese Mittendickentoleranzen aufweisen können. Des Weiteren ist dadurch auch beispielsweise ein weiterer Bearbeitungsgang, beispielsweise ein zweites Polieren möglich, falls während des ersten Bearbeitungsgang ein Fehler aufgetreten sein sollte.

Die Auflagefläche 9 ist vorzugsweise ringförmig im durch die Spannbacken 4 gebildeten Aufnahmeraum für die Linse 2 ausgebildet, vorteilhafterweise entlang eines unteren Außenrandes des Aufnahmeraums entlang einer Innenseite der Spannbacken 4. Auf dieser Auflagefläche 9 liegt die Linse 2 mit einer Rückseite 10 auf, so dass die Linse 2 in der Spannzange 1 plan gehalten ist. Dabei ist die Auflagefläche 9 zweckmäßigerweise derart korrespondierend zu einem auf der Auflagefläche 9 aufliegenden Bereich der Rückseite 10 der Linse 2 ausgebildet, dass die plane Halterung der Linse 2 in der Spannzange 1 sichergestellt ist. Durch die innere seitliche Anlagefläche 14 der Spannbacken 4, mit welcher die Spannbacken 4 seitlich an der Linse 2 anliegen, ist die Linse 2 in der Spannzange 1 zentriert gehalten.

Ein innerer Bereich, welcher von der ringförmigen Auflagefläche 9 umschlossen ist, ist gegenüber der Auflagefläche 9 abgesenkt ausgebildet, so dass in diesem inneren Bereich die Rückseite 10 der Linse 2 die Spannzange 1 nicht berührt. Auf diese Weise ist eine Beschädigung der Linse 2 insbesondere in einem zentralen, optisch wirksamen Bereich durch die Spannzange 1 vermieden. Zudem können eventuell vorhandene Schmutzpartikel, zum Beispiel Schleif- und Polieirückstände von einer vorangegangenen Linsenbearbeitung, in diesen Bereich entweichen, so dass sie die Auflagefläche 9 nicht verschmutzen und dadurch die optimale Anordnung der Linse 2 in der Spannzange 1, d. h. die plane Auflage der Linse 2 auf der Auflagefläche 9 nicht behindern und die Rückseite 10 der Linse 2 nicht beschädigen.

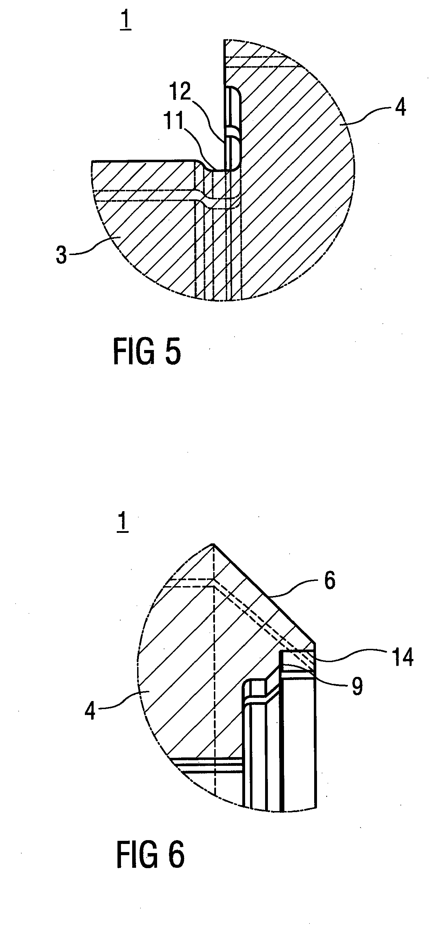

Der Schaft 3 weist an einer Außenseite im Übergangsbereich zu den Spannbacken 4, das heißt am oberen Ende, eine nutartige Schaftvertiefung 11 auf. In der ersten und zweiten Ausführungsform der Spannzange 1 weisen auch die Spannbacken 4 an einer Außenseite im Übergangsbereich zum Schaft 3, d. h. an der Unterseite und unmittelbar am Schaft 3 angrenzend, eine nutartige Spannbackenvertiefung 12 auf. Hier sind die beiden nutartigen Vertiefungen 11, 12 zu einer umlaufenden Vertiefung verbunden, wie insbesondere in den Figuren 5 und 12 in den Detailansichten erkennbar.

Diese Vertiefung ermöglicht bzw. die Schaftvertiefung 11 und die Spannbackenvertiefung 12 ermöglichen ein optimiertes Einsetzen der Spannzange 1 in das Hydrodehn-Spannfutter 8, wobei die Spannzange 1, sowohl mit dem Schaft 3 als auch mit der Unterseite der Spannbacken 4, optimal am Hydrodehn-Spannfutter 8 anliegt und nicht durch eventuelle Schmutzpartikel, zum Beispiel Schleif- oder Polierrückstände von vorangegangenen Linsenbearbeitungen, behindert ist. Diese Schmutzpartikel können in die Schaftvertiefung 11 und die Spannbackenvertiefung 12 bzw. in die durch diese gebildete gemeinsame Vertiefung entweichen und behindern das Einsetzen der Spannzange 1 in das Hydrodehn-Spannfutter 8 nicht. Dadurch ist ein exaktes Spannen der Spannzange 1 und auf diese Weise ein exaktes Einspannen der Linse 2 in der Spannzange 1 ermöglicht.

In der dritten, in den Figuren 13 bis 15 dargestellten Ausführungsform der Spannzange 1 ist zentriert im Aufnahmeraum für die Linse 2 eine Linsenabstützung 13 ausgebildet. Diese Ausführungsform ist beispielsweise für die in Figur 16 dargestellte Linse 2 mit einer dem zu bearbeitenden Bereich 7 gegenüberliegenden konkaven Rückseite 10 geeignet und ermöglicht eine zur Auflagefläche 9 der vorherigen Ausführungsbeispiele alternative Abstützung und plane Halterung der Linse 2 in der Spannzange 1. Die ringförmige randseitige Auflagefläche 9 ist bei dieser Ausführungsform daher nicht erforderlich, da die Linse 2 allein auf der Linsenabstützung 13 aufliegt.

Eine Anlagefläche der Linsenabstützung 13 ist vorzugsweise abgerundet ausgebildet, um eine Beschädigung eines an dieser Anlagefläche anliegenden Bereiches der Linse 2 zu verhindern. Dies ist insbesondere erforderlich, da es sich bei dem Bereich der Linse 2, welcher an der Anlagefläche der Linsenabstützung 13 anliegt, um einen zentralen und daher üblicherweise optisch wirksamen Bereich der Linse 2 handelt, welcher durch die Beruhrung mit der Spannzange 1, d. h. mit der Anlagefläche der Linsenabstützung 13, nicht beschädigt werden darf. Die Linsenabstützung 13 bzw. deren Anlagefläche ist zweckmäßigerweise derart korrespondierend zu einem auf der Anlagefläche aufliegenden Bereich der Rückseite 10 der Linse 2 ausgebildet, dass die plane Halterung der Linse 2 in der Spannzange 1 sichergestellt ist. Eine Höhe der Linsenabstützung 13 ist analog zur Auflagefläche 9 derart ausgebildet, dass der zu bearbeitende Bereich 7 der Linse 2 zumindest vor der Bearbeitung oberhalb des oberen Randbereichs 6 der Spannzange 1 angeordnet ist und durch das Schleif- oder Polierwerkzeug zugänglich und zu bearbeiten ist. In dieser dritten Ausführungsform der Spannzange 1 ist die Linse 2 durch die innere seitliche Anlagefläche 14 der Spannbacken 4, mit welcher die Spannbacken 4 seitlich an der Linse 2 anliegen, in der Spannzange 1 zentriert gehalten und durch die Linsenabstützung 13 in der Spannzange 1 abgestützt und plan gehalten.

In dieser dritten, in den Figuren 13 bis 15 dargestellten Ausführungsform der Spannzange 1 ist die Wandstärke des unteren Bereiches des Schaftes 3, über welchen die Schaftteile miteinander verbunden sind, anders als in den beiden anderen Ausführungsformen, dicker als die Wandstärke der durch die radialen Schlitze 5 voneinander getrennten Schaftteile, da der untere Bereich des Schaftes 3 mit der Linsenabstützung 13 verbunden ist. D. h. die Linsenabstützung 13 ist unten am Schaft 3 befestigt, im oberen Teil des Schaftes 3 jedoch in einem hohlen Innenraum des Schaftes 3 freistehend, so dass die Schaftteile und die Spannbacken 4 ausreichenden Freiraum haben, um aufgrund des Spannens durch das Hydrodehn-Spannfutter 8 nach innen zu schwenken und dadurch die Linse 2 zwischen den Spannbacken 4 einspannbar ist. Auch in diesem Fall liegt die Schwenkachse, um welche die durch die radialen Schlitze 5 getrennten Schaftteile und die an deren oberen Ende angeformten Spannbacken 4 schwenken, im Bereich des unteren Endes der radialen Schlitze 5. Um die Schwenkachse besser zu definieren und das Schwenken der Spannbacken 4 exakter zu gestalten, kann im Bereich eines Bodens des zwischen den Schaftteilen und der Linsenabstützung 13 gebildeten Freiraums, d. h. oberhalb der Verbindung zwischen den Schaftteilen und der Linsenabstützung 13, eine Wandstärke der Schaftteile reduziert sein, so dass durch diese reduzierte Wandstärke 15 die Schwenkachse für die Schaftteile und die Spannbacken 4 definiert ist.

### BEZUGSZEICHENLISTE

- 1: Spannzange
- 2: Linse
- 3: Schaft
- 4: Spannbäcken
- 5: Schlitz
- 6: oberer Randbereich
- 7: zu bearbeitender Bereich
- 8: Hydrodehn-Spannfutter
- 9: Auflagefläche
- 10: Rückseite
- 11: Schaftvertiefung
- 12: Spannbackenvertiefung
- 13: Linsenabstützung
- 14: Anlagefläche
- 15: reduzierte Wandstärke

## Patentansprüche

1. Verfahren zum Schleifen und/oder Polieren einer Linse (2), wobei die Linse (2) mit ihrem finalen Durchmesser in eine Spannzange (1) zum Halten der Linse (2) eingespannt wird und danach mittels eines zumindest teilweise flexiblen Schleif- bzw. Polierwerkzeug, welches sich einer Form eines zu bearbeitenden Bereichs (7) der Linse (2) anpasst, geschliffen oder poliert wird, wobei die Spannzange einen Schaft (3) und zumindest zwei durch radiale Schlitze (5) voneinander getrennte Spannbacken (4) umfasst., wobei eine Form eines oberen Randbereichs (6) der Spannbacken (4), welcher eine Auflagefläche für das zumindest teilweise flexible Schleif- bzw. Polierwerkzeug bildet, als radiale Fortsetzung eines zu bearbeitenden Bereichs (7) der mittels der Spannzange (1) zu haltenden Linse (2) ausgebildet ist, wobei das Schleif- bzw. Polierwerkzeug während einer Bearbeitung von Randbereichen der Linse (2) teilweise auf dem oberen Randbereich (6) der Spannbacken (4) aufliegt,
- wobei ein Abstand von einer an einem unteren Außenrand eines durch die Spannbacken (4) gebildeten Aufnahmeraumes für die Linse (2) ringförmig ausgebildeten Auflagefläche (9) für die Linse (2) zum oberen Randbereich (6) einer Dicke der Linse (2) an deren Rand entspricht oder um einen Wert kleiner als die Dicke der Linse ist, welcher einem Materialabtrag während des auf das Einspannen in der Spannzange folgenden Schleifens und/oder Polierens oder dem Materialabtrag während des auf das Einspannen in der Spannzange folgenden Schleifens und/oder Polierens und einer zusätzlichen Mittendickentoleranz entspricht,
oder
- wobei zentriert in einem durch die Spannbacken (4) gebildeten Aufnahmeraum für die Linse (2) eine Linsenabstützung (13) mit einer abgerundeten Anlagefläche ausgebildet ist.

2. Verfahren nach Anspruch 1,
**dadurch gekennzeichnet, dass** der obere Randbereich (6) der Spannzange (1), in welche die Linse (2) eingespannt wird, asphärisch, konisch oder sphärisch ausgeformt ist.

3. Verfahren nach einem der vorhergehenden Ansprüche,
**dadurch gekennzeichnet, dass** die Spannzange (1), in welche die Linse (2) eingespannt wird aus Metall hergestellt ist.

4. Verfahren nach Anspruch 3,
**dadurch gekennzeichnet, dass** die Spannzange (1), in welche die Linse (2) eingespannt wird, aus Stahl, insbesondere aus gehärtetem Stahl, hergestellt ist.

5. Verfahren nach einem der vorhergehenden Ansprüche,
**dadurch gekennzeichnet, dass** eine Waridstärke des Schaftes (3) der Spannzange (1), in welche die Linse (2) eingespannt wird, unterhalb der radialen Schlitze (5) dünner ausgebildet ist als im Bereich der radialen Schlitze (5).

6. Verfahren nach einem der vorhergehenden Anspräche,
**dadurch gekennzeichnet, dass** der Schaft (3) der Spannzange (1), in welche die Linse (2) eingespannt wird, an einer Außenseite im Übergangsbereich zu den Spannbacken (4) eine nutartige Schaftvertiefung (11) aufweist.

7. Verfahren nach einem der vorhergehenden Ansprüche,
**dadurch gekennzeichnet, dass** die Spannbacken (4) der Spannzange (1), in welche die Linse (2) eingespannt wird, an einer Außenseite im Übergangsbereich zum Schaft (3) eine nutartige Spannbackenvertiefung (12) aufweisen.

## Claims

1. Method for grinding and/or polishing a lens (2), wherein the lens (2) is clamped at its final diameter in a collet (1) for holding the lens (2) and is then ground or polished by means of an at least partially flexible grinding or polishing tool which adapts to a shape of a region (7) to be machined of the lens (2), wherein the collet comprises a shank (3) and at least two clamping jaws (4) that are separated from one another by radial slots (5), wherein a shape of an upper peripheral region (6) of the clamping jaws (4), which forms a bearing surface for the at least partially flexible grinding or polishing tool, is configured as a radial continuation of a region (7) to be machined of the lens (2) to be held by means of the collet (1), wherein the grinding or polishing tool rests partially on the upper peripheral region (6) of the clamping jaws (4) while peripheral regions of the lens (2) are being machined,
- wherein a distance of a bearing surface (9) for the lens (2), said bearing surface (9) being formed in an annular manner on a lower outer periphery of a receiving space, formed by the clamping jaws (4), for the lens (2), from the upper peripheral region (6) corresponds to a thickness of the lens (2) at its periphery or is smaller than the thickness of the lens by a value which corresponds to the removal of material during grinding and/or polishing that takes place after clamping in the collet, or which corresponds to the removal of material during grinding and/or polishing that takes place after clamping in the collet plus an additional centre thickness tolerance,
or
- wherein a lens support (13) having a rounded bearing surface is formed in a centred manner in a receiving space, formed by the clamping jaws (4), for the lens (2).

2. Method according to Claim 1,
**characterized in that** the upper peripheral region (6) of the collet (1) in which the lens (2) is clamped is formed in an aspherical, conical or spherical manner.

3. Method according to either of the preceding claims,
**characterized in that** the collet (1) in which the lens (2) is clamped is produced from metal.

4. Method according to Claim 3,
**characterized in that** the collet (1) in which the lens (2) is clamped is produced from steel, in particular hardened steel.

5. Method according to one of the preceding claims,
**characterized in that** a wall thickness of the shank (3) of the collet (1) in which the lens (2) is clamped is configured to be thinner beneath the radial slots (5) than in the region of the radial slots (5).

6. Method according to one of the preceding claims,
**characterized in that** the shank (3) of the collet (1) in which the lens (2) is clamped has a groove-like shank depression (11) on an outer side in the transition region to the clamping jaws (4).

7. Method according to one of the preceding claims,
**characterized in that** the clamping jaws (4) of the collet (1) in which the lens (2) is clamped have a groove-like clamping-jaw depression (12) on an outer side in the transition region to the shank (3).

## Revendications

1. Procédé de meulage et/ou de polissage d'une lentille (2), la lentille (2) étant serrée à son diamètre final dans une pince de serrage (1) pour retenir la lentille (2) puis, au moyen d'un outil de meulage ou de polissage au moins en partie flexible, qui s'adapte à la forme d'une région (7) de la lentille (2) à usiner, étant meulée ou polie, la pince de serrage comprenant une tige (3) et au moins deux mâchoires de serrage (4) séparées l'une de l'autre par des fentes radiales (5), une forme d'une région de bord supérieure (6) des mâchoires de serrage (4), qui forme une surface de support pour l'outil de meulage ou de polissage au moins en partie flexible, étant réalisée sous forme de saillie radiale d'une région (7) à usiner de la lentille (2) devant être retenue au moyen de la pince de serrage (1), l'outil de meulage ou de polissage, pendant un usinage de régions de bord de la lentille (2), reposant en partie sur la région de bord supérieure (6) des mâchoires de serrage (4),
- une distance d'une surface de support annulaire (9) pour la lentille (2) réalisée au niveau d'un bord extérieur inférieur d'un espace de réception pour la lentille (2) formé par les mâchoires de serrage (4) correspondant à la région de bord supérieure (6) d'une épaisseur de la lentille (2) au niveau de son bord ou étant inférieure d'une certaine valeur à l'épaisseur de la lentille, qui correspond à un enlèvement de matière pendant le meulage et/ou le polissage après le serrage dans la pince de serrage ou à l'enlèvement de matière pendant le meulage et/ou le polissage après le serrage dans la pince de serrage plus une tolérance d'épaisseur moyenne supplémentaire, ou
- un support de lentille (13) avec une surface d'appui arrondie étant réalisé de manière centrée dans un espace de réception pour la lentille (2) formé par les mâchoires de serrage (4).

2. Procédé selon la revendication 1, **caractérisé en ce que** la région de bord supérieure (6) de la pince de serrage (1) dans laquelle la lentille (2) est serrée, est formée sous forme non sphérique, conique ou sphérique.

3. Procédé selon l'une quelconque des revendications précédentes, **caractérisé en ce que** la pince de serrage (1) dans laquelle est serrée la lentille (2) est fabriquée en métal.

4. Procédé selon la revendication 3, **caractérisé en ce que** la pince de serrage (1) dans laquelle est serrée la lentille (2) est fabriquée en acier, en particulier en acier trempé.

5. Procédé selon l'une quelconque des revendications précédentes, **caractérisé en ce qu'**une épaisseur de paroi de la tige (3) de la pince de serrage (1) dans laquelle est serrée la lentille (2) en dessous des fentes radiales (5) est réalisée sous forme plus mince que dans la région des fentes radiales (5).

6. Procédé selon l'une quelconque des revendications précédentes, **caractérisé en ce que** la tige (3) de la pince de serrage (1) dans laquelle est serrée la lentille (2) présente au niveau d'un côté extérieur, dans la région de transition aux mâchoires de serrage (4), un renfoncement de tige de type rainure (11).

7. Procédé selon l'une quelconque des revendications précédentes, **caractérisé en ce que** les mâchoires de serrage (4) de la pince de serrage (1) dans laquelle est serrée la lentille (2) présentent au niveau d'un côté extérieur dans la région de transition à la tige (3) un renfoncement de mâchoires de serrage de type rainure (12).
